# DEMANDE DE BREVET EUROPEEN

(11) **EP 1 143 729 A1**
(43) Date de publication de la demande: **10.10.2001**
(21) Numéro de dépôt: 01400119.2
(22) Date de dépôt: 16.01.2001
(51) Int. Cl.: H04N 7/16

(54) **Dispositif de décodage d'un flux d'information de télévision et procédé de transmission de données relatives à une boîte à lettres électronique**

(30) Priorité: 02.03.2000 FR 0002715
(71) Demandeur: SAGEM SA, 75116 Paris (FR)
(72) Inventeur: Cuoq, M. Jean Noel, 92150 Suresnes (FR)
(74) Mandataire: Schmit, Christian Norbert Marie

(57) **Abrégé**

Afin d'éviter d'avoir à établir régulièrement une connexion avec un serveur (124, 125) d'un fournisseur d'accès à Internet on prévoit de renseigner une tête (101) de station sur les boîtes à lettre électronique des abonnés à l'opérateur de télévision gérant la tête de station. La tête de station interroge alors des serveurs de fournisseurs d'accès à Internet afin de connaître le nombre de messages présents dans les boîtes à lettres des abonnés. Puis la tête de station transmet cette information via le flux de télévision. L'abonné est informé du contenu d'une de ses boîtes à lettre soit par l'état d'une LED (120) sur son récepteur/décodeur (112) de télévision, soit par une icône incrustée dans l'image de la télévision.

## Description

L'invention a pour objet un dispositif de décodage d'un flux d'information de télévision et un procédé de transmission de données relatives à une boîte à lettres électronique. Le domaine de l'invention est le domaine formé par les domaines de la télévision et des messageries électroniques. Le but de l'invention est, d'une part de s'affranchir de la mise en oeuvre d'un ordinateur personnel pour connaître l'état de sa boîte à lettres, d'autre part de limiter l'encombrement des liaisons Internet traditionnelles. Par liaison Internet traditionnelle on entend la liaison qui relie un particulier à son fournisseur d'accès à Internet, ou i son serveur de messagerie.

Dans l'état de la technique on connaît des boîtiers décodeurs qui sont dotés de moyens pour se connecter sur Internet. Un boîtier décodeur est un appareil qui permet à son utilisateur de recevoir et de visualiser des programmes de télévision diffusés par un opérateur de télévision privé par exemple. Un boîtier décodeur est donc connecté soit à une antenne soit à un câble qui lui amène un signal de télévision. Ce signal de télévision est alors décodé par le boîtier décodeur qui produit un signal qui est à son tour fourni à une télévision. L'utilisateur accède aux fonctions du boîtier décodeur grâce à une télécommande de ce boîtier décodeur. L'utilisateur sélectionne grâce à cette télécommande la chaîne qu'il souhaite que le décodeur décode.

On connaît des boîtiers décodeurs qui comportent des moyens de se connecter à Internet Cette connexion est aussi commandée grâce à une télécommande du boîtier décodeur. L'utilisateur appuie alors sur une touche de la télécommande, ce qui a pour effet de connecter le boîtier décodeur à Internet. Cette connexion s'effectue en général par une ligne téléphonique. Le boîtier décodeur va donc prendre la ligne téléphonique, composer le numéro de téléphone d'un fournisseur d'accès à Internet et s'y connecter. Le boîtier décodeur est aussi connecté à un écran de télévision sur lequel le boîtier décodeur renvoie des images correspondant aux informations qu'il reçoit du réseau Internet. L'utilisateur peut alors utiliser sa télécommande soit pour naviguer sur le réseau Internet, soit pour interroger sa boîte à lettres électronique, soit pour d'autres opérations que lui permet le fournisseur d'accès à Internet auquel est abonné l'utilisateur. Pour effectuer ces opérations il suffit que dans la pratique la télécommande soit dotée d'un dispositif de pointage, et que le boîtier décodeur intègre un logiciel de navigation.

L'inconvénient de ce dispositif est que lorsqu'on est connecté à Internet on ne peut plus regarder la télévision et inversement, lorsque l'on regarde la télévision on n'a plus accès à Internet. En effet l'écran auquel est connecté le boîtier décodeur n'est plus disponible puisqu'il affiche des informations en provenance du réseau Internet. D'autre part un autre problème est quel l'on est obligé de se connecter au fournisseur d'accès pour savoir si une boîte à lettres comporte ou non des messages. Cette connexion a d'une part un coût, et d'autre part elle provoque un encombrement du réseau téléphonique commuté. Si le boîtier connecteur n'est pas connecté au réseau téléphonique, mais à un accès Internet par câble, le problème du coût de la connexion ne se pose plus, par contre il subsiste celui de l'encombrement du réseau.

Dans l'état de la technique on connaît aussi d'autres moyens de se connecter à Internet pour consulter une boîte à lettres électronique. Le plus courant d'entre eux est d'utiliser un ordinateur personnel. L'ordinateur personnel est alors connecté à un modem ce qui permet d'accéder au réseau Internet via le réseau téléphonique et à un fournisseur d'accès à Internet. Dans ce cas l'ordinateur personnel comporte son propre écran, il est donc possible de se connecter à Internet et de regarder la télévision en même temps, à condition d'être capable de regarder deux écrans en même temps. Cependant lorsque l'on utilise un ordinateur personnel il y a toujours le problème d'encombrement du réseau qui permet d'accéder à Internet. De plus cette solution impose d'avoir au moins deux appareils, l'ordinateur personnel est le boîtier de décodage pour la télévision.

L'invention résout ces problèmes en incorporant dans le flux d'information de télévision reçue par le boîtier décodeur des données relatives à l'état des boîtes à lettres d'abonnés à un opérateur de télévision privé. Dans la pratique il ne s'agit pas forcément d'un opérateur privé. Il se trouve que pour l'instant seul des opérateurs privés propose ce mode de diffusion de programmes de télévision. Les données relatives à l'état des boîtes à lettres sont incluses dans le flux d'informations de télévision par l'opérateur de télévision. Les données et les informations de télévision sont multiplexées dans le temps. Pour obtenir les données sur les boîtes à lettres de ses abonnés un opérateur de télévision se connecte au fournisseur d'accès à Internet auquel les abonnés de l'opérateur ont déclaré avoir confié la gestion de leurs boîtes à lettres électronique. Un abonné à un opérateur de télévision va donc recevoir sur son boîtier-décodeur des données relatives à l'état de sa boîte à lettres électronique. Ces données seront extraites par le décodeur et visualisées soit par l'intermédiaire d'un élément électroluminescent sur le décodeur, dans ce cas le fait que cet élément électroluminescent clignote indique à l'utilisateur qu'il a des messages dans sa boîte à lettres électronique. L'indication de l'état de la boîte à lettres électronique peut aussi être effectuée par une incrustation d'une icône dans l'image de la télévision. L'utilisateur du boîtier décodeur est alors libre de choisir de se connecter ou pas à Internet pour aller lire ses messages. Le mode de connexion, par boîtier décodeur ou par un autre moyen, reste aussi à sa discrétion.

L'invention a donc pour objet un dispositif de décodage d'un flux d'information de télévision caractérisé en ce qu'il comporte des moyens pour extraire du flux d'information des données relatives à la présence d'un ou plusieurs messages dans une boîte à lettres électronique, et des moyens pour visualiser le contenu de ces données pendant une session de télévision.

L'invention a aussi pour objet un procédé de transmission de données relatives à la présence d'un ou plusieurs messages dans une boîte à lettres électronique caractérisé en ce que:
- un opérateur de télévision se connecte à un fournisseur d'accès à Internet pour récupérer des données relatives au contenu de boîtes aux lettres électroniques d'abonnés à l'opérateur et au fournisseur,
- l'opérateur incorpore dans un flux d'information de télévision qu'il diffuse les données qu'il a récupérées,
- on visualise ces données pendant une session de télévision.

L'invention sera mieux comprise à la lecture de la description qui suit et à l'examen des figures qui l'accompagnent. Celles-ci sont fournies à titre indicatif et nullement limitatif de l'invention. Les figures montrent :
- Figure 1 : une illustration de moyens utiles pour la mise en oeuvre de l'invention.
- Figure 2 : une illustration d'étape du procédé selon l'invention.

Dans la description qui suit, mais aussi dans le préambule de cette demande, il est fait référence au réseau Internet. L'invention est transposable à un autre réseau local, de type Intranet par exemple, ou non encore mis en place. On peut donc aisément remplacer fournisseur d'accès à Internet par fournisseur d'accès à un réseau.

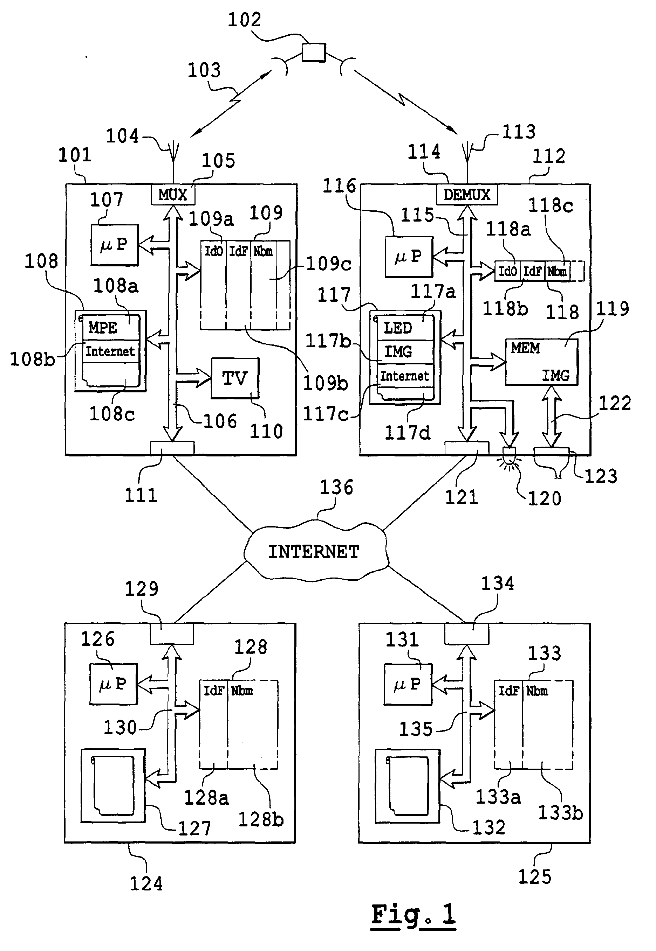

La figure 1 montre une tête 101 de station d'un opérateur de télévision. Dans l'exemple traité la tête 101 de station est en liaison 103 avec un satellite 102. Pour assurer la liaison 103 la tête de station 101 comporte une antenne 104. L'antenne 104 est d'autre part connectée à des circuits 105 de numérisation-dénumérisation et modulation-démodulation. Les circuits 105 reçoivent des signaux analogiques de l'antenne 104 les démodulent et produisent des signaux numériques. D'autre part les circuits 105 reçoivent aussi les signaux numériques qu'ils vont moduler et transformer en signaux analogiques qui seront émis par l'antenne 104. Le circuit 105 est donc connecté à un bus 106. Les bus de cette description contiennent tous les fils ou pistes nécessaires à la transmission de signaux, de données, d'adresses, d'interruptions et de commandes. Un circuit 105 et l'antenne 104 constituent donc l'interface de la tête 101 de station avec le satellite 102.

La tête 101 de station comporte aussi un microprocesseur 107, une mémoire de programme 108, une mémoire 109 d'enregistrement de données sur les abonnés, et les circuits 110 de production de signaux numériques de télévision. Les éléments 107 à 110 sont connectés au bus 106.

La mémoire 108 comporte plusieurs zones, notamment une zone 108a dite MPE (Multiple Protocole Encapsulation) qui contient des codes instruction qui commandent le microprocesseur lorsque celui-ci envoie des informations au circuit 105. Les codes instructions de la zone 108a permettent au microprocesseur de mélanger des données issues des circuits 110 et de la table 109. La mémoire 108 contient aussi une zone 108b dite Internet. La zone 108b comporte des codes instruction qui commandent le microprocesseur lorsque la tête 101 de station a besoin de se connecter à Internet. Enfin la zone 108 comporte une zone 108c qui comporte les codes instruction nécessaires à l'activité normale de la tête 101 de station, des zones de donnée et des zones dites de mémoire de travail.

La mémoire 109 est structurée en lignes et en colonnes, chaque ligne correspond à un abonné, chaque colonne correspond à un renseignement sur cet abonné. La mémoire 109 comporte donc au moins autant de lignes qu'il y a d'abonnés gérés par la tête 101 de station. La mémoire 109 comporte au moins deux colonnes, une première colonne 109a permet d'enregistrer un identifiant de l'abonné à l'opérateur de télévision qui gère la tête 101 de station, une deuxième colonne 109b permet d'enregistrer un identifiant pour accéder à la boîte à lettres électronique d'un abonné à l'opérateur de télévision. On peut aussi enregistrer dans une troisième colonne 109c le nombre de message présent dans la boîte à lettre. Cela permet de faciliter des traitements ultérieurs.

La tête 101 de station comporte aussi un circuit 111 connecté au bus 106. Le circuit 111 est une interface entre la tête 101 de station et le réseau Internet. Le circuit 111 peut être un modem analogique, un modem numérique, ou tout simplement une carte réseau selon le mode de connexion de la tête 101 de station du réseau Internet.

La figure 1 montre aussi un boîtier décodeur 112. Le boîtier 112 comporte une antenne 113 qui reçoit des émissions du satellite 102. L'antenne 113 est connectée à un circuit 114 dit de démultiplexage. Parmi toutes les informations reçues par l'antenne 113, c'est le circuit 114 qui fait le tri pour savoir celles qui sont destinées au boîtier 112. Les circuits 114 sont connectés à un bus 115. Le boîtier 112 comporte un microprocesseur 116, une mémoire de programme 117, une mémoire de paramétrage 118, une mémoire 119 vidéo, un dispositif 120 électroluminescent, et une interface 121 avec le réseau Internet. Les éléments 116 à 121 sont connectés au bus 115.

La mémoire 117 comporte plusieurs zones, dont une première zone 117a. La zone 117a comporte des codes instruction qui commandent au microprocesseur lorsque celui-ci doit activer le dispositif 120 électroluminescent. Une deuxième zone 117b comporte des codes instruction qui commandent le microprocesseur 116 lorsque celui-ci doit incruster un icône dans une image contenue dans la mémoire 119. Une troisième zone 117c de la mémoire 117 comporte des codes instruction qui commandent le microprocesseur lorsque l'utilisateur du boîtier 112 souhaite naviguer sur Internet. Enfin une quatrième zone 117d de la mémoire 117 comporte d'autres codes instruction commandant le microprocesseur 116 lorsque celui-ci doit effectuer des opérations ayant trait à l'activité normale du boîtier 112. La zone 117d comporte aussi des zones de données et des zones de mémoire de travail.

La mémoire 119 est connectée par un bus 122 à un connecteur 123. Le connecteur 123 peut être connecté à un écran de télévision. Le connecteur 123 comporte des moyens pour lire le contenu de la mémoire 119 et le transformer en un signal compatible avec l'écran branché sur le connecteur 123. Le microprocesseur 116, sous le contrôle de la mémoire 117 reçoit des données par le circuit 114 et constitue une image qu'il écrit dans la mémoire 119. La mémoire 119 est donc écrite par le microprocesseur 116 et lue par le connecteur 123.

La mémoire 118 comporte des informations sur l'abonné utilisant le boîtier 112. La mémoire 118 comporte notamment un identifiant 118a de l'abonné pour l'opérateur de télévision, un identifiant 118b du fournisseur d'accès à Internet de l'abonné utilisant le boîtier 112 et un champs 118c dans lequel on enregistre le nombre de messages non lus dans la boîte à lettres électronique de l'utilisateur du boîtier 112. Dans la pratique la mémoire 118 peut contenir d'autres champs.

L'interface 121 est de l'un des types décrits pour les circuits 111. Les types décrits ne constituent pas une liste exhaustive de nature possible pour le circuit 121.

La figure 1 montre qu'il est possible de connecter les appareils 101 et 112 au réseau 136 Internet. La figure 1 montre aussi deux serveurs, 124 et 125 connectés au réseau 136 Internet. Les serveurs 124 et 125 sont des serveurs de fournisseur d'accès à Internet. Dans la pratique le nombre de ces serveurs est supérieure à deux. Le premier serveur 124 comporte un microprocesseur 126, une mémoire 127 et une table 128 de gestion des abonnées, et une interface 129 de connexion au réseau Internet. Les éléments 126 à 129 sont connectés à un bus 130. La mémoire comporte les codes instruction, les zones de travail et de données, nécessaires à l'activité du microprocesseur 126.

La mémoire 128 est structurée en lignes et en colonnes, chaque ligne correspond à un abonné du fournisseur d'accès à Internet qui gère le serveur 124. Chaque colonne de la mémoire 128 correspond à une information sur un abonné. La mémoire 128 comporte au moins deux colonnes, une première colonne 128a enregistre un identifiant de l'abonné, une deuxième colonne 128b enregistre le nombre de messages non lus sur le serveur.

Le serveur 125 correspond à un autre fournisseur d'accès à Internet et comporte des éléments 131 à 135 identiques aux éléments 126 à 130 respectivement.

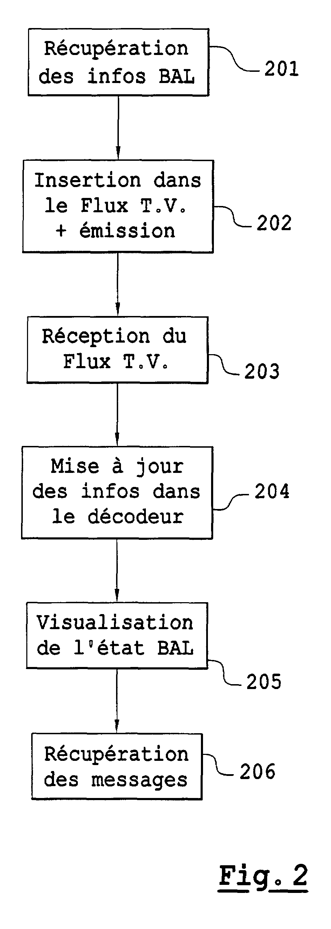

La figure 2 montre une première étape 201 préliminaire de récupération des informations des boîtes à lettres électroniques. Dans cette étape le microprocesseur 107, commandé par des codes instruction contenus dans la zone 108b, parcourt la table 109. Pour chaque abonné de la table 109 il constitue une requête qu'il envoie sur Internet via l'interface 111. La requête ainsi constituée comporte l'identifiant de la colonne 109b. Cet identifiant permet d'identifier un fournisseur d'accès, et un abonné à ce fournisseur d'accès. La requête transite par le réseau 136 Internet, et selon le fournisseur d'accès arrive soit sur le serveur 124 soit sur le serveur 125. Dans notre exemple on ne traite le cas que de deux serveurs, mais dans la pratique ils sont bien plus nombreux. La requête est destinée au serveur 124. Le serveur 124 reçoit donc cette requête par l'intermédiaire de l'interface 129 qui la met à disposition du microprocesseur 126. Le microprocesseur 126, commandé par les codes instructions contenus dans la mémoire 127, consulte la table 128 afin d'y retrouver l'identifiant de l'abonné contenu dans la requête qu'il a reçu. Pour se faire le microprocesseur 126 parcourt séquentiellement la table 128 jusqu'à ce qu'il trouve l'identifiant de l'abonné dans la colonne 128a. Lorsqu'il a trouvé l'identifiant de l'abonné il récupère le contenu de la colonne 128b correspondant à cet identifiant. Alors le microprocesseur 126 constitue une réponse avec le contenu de la colonne 128b et il l'envoie en direction de la tête 101 de station. Dans la pratique, soit le serveur 124 connaît, pour chaque abonné, un identifiant de la tête de station à laquelle il doit envoyer sa réponse, soit la requête émise par la tête 101 de station comporte l'identifiant à laquelle doit être renvoyée la réponse.

Lorsque la tête 101 de station reçoit la réponse à sa requête, soit elle l'enregistre dans une colonne de la table 109, soit elle l'insère directement dans le flux télé. Dans cet exemple on considère qu'elle l'enregistre dans une colonne 109c. A cet effet, la réponse du serveur 124 comporte l'identifiant de l'abonné afin que le microprocesseur 107 puisse mettre à jour la bonne ligne dans la table 109.

Dans une variante de l'invention le serveur 124 stocke dans une colonne de la table 128 une information permettant d'identifier l'opérateur de télévision auquel est éventuellement abonné un abonné au fournisseur d'accès gérant le serveur 124. Dans ce cas le serveur 124 peut notifier à la tête 101 de station les changements de contenu des boîtes à lettres électroniques gérées par le serveur 124. En effet lorsqu'un abonné à un fournisseur d'accès Internet reçoit un message, ce message avant d'être transmis à l'abonné est d'abord stocké sur le serveur 124. Dans cette variante le serveur 124 peut alors aussi notifier la tête 101 de station lorsque l'abonné consulte sa boîte à lettres et qu'il la vide de ses messages. Dans cette variante la table 128 doit stocker pour chaque abonné un identifiant de l'opérateur de télévision à notifier en cas de réception d'un nouveau message.

De l'étape 201 on passe à une étape 202 d'insertion dans le flux télé et d'émission du flux de télévision. Dans l'étape 202 le microprocesseur 107 commandé par des codes instruction contenus dans la zone 108a parcourt la table 109. Pour chaque abonné contenu dans la table 109 le microprocesseur 107 lit le contenu de la colonne 109c. Le microprocesseur 107 constitue alors une trame contenant l'information de la colonne 109c et l'identifiant de la colonne 109a. Puis il transmet cette trame au circuit 105 qui la transmet en même temps que le flux d'images issu du circuit 110. La trame constituée par le microprocesseur 107 est par exemple au format TCP IP alors que le flux d'images est au format MPEG. Il s'agit de deux protocoles qui sont multiplexés temporellement selon une norme appelée MPE pour Multiple Protocole Encapsulation, ou Encapsulation de Protocoles Multiples.

On passe alors à une étape 203 de réception du flux de télévision par le boîtier 112. Dans l'étape 203 l'antenne 113 reçoit le flux d'informations issu d'une tête de station 101 via l'antenne 104 et le satellite 102. Le circuit 114 démodule ce signal radioélectrique afin d'obtenir des signaux numériques et extraits de ces signaux numériques des données qui intéressent le boîtier 112. Ces données sont identifiées grâce au contenu de la mémoire 118. En effet les données à destination de l'appareil 112 sont encapsulés dans une trame, quel que soit le protocole employé, comportant l'identifiant enregistré dans le champ 118a. On note que le programme de télévision retenu est, quant à lui, fonction du paramétrage de la chaîne de télévision que le boîtier 112 doit décoder. On passe à une étape 204 de mise à jour des informations dans le décodeur.

Dans l'étape 204 le microprocesseur 116 lit dans la trame qu'il a reçu le nombre de messages présents dans la boîte à lettres de l'utilisateur du décodeur 112, puis il stocke ce nombre dans le champ 118c.

On passe à une étape 205 de visualisation de l'état de la boîte à lettres. Dans l'étape 205 le microprocesseur 116 sous le contrôle de codes instruction contenus dans la mémoire 117a lit le contenu du champ 118c. Puis le microprocesseur 116, en fonction du contenu du champ 118c stimule le dispositif 120. Si le contenu du champ 118c est 0, le dispositif 120 reste éteint. Si le contenu du champ 118c est n, le microprocesseur va faire clignoter n fois le dispositif 120 à intervalles rapprochés, attendre un intervalle de temps à peu près égal à cinq fois l'intervalle de temps rapproché et recommencer la séquence de clignotements. Le rapport de cinq est variable et est réglé en usine à la fabrication du décodeur. Ce rapport doit permettre de compter sans ambiguïté le nombre de clignotements dans une séquence.

Dans une variante de l'invention, ou en plus de la précédente variante, le microprocesseur 116, sous le contrôle de codes instruction contenus dans la mémoire 117b, incruste dans l'image contenue dans la mémoire 119 une icône qui indique à l'utilisateur le nombre de messages qu'il a dans sa boîte à lettres électronique. Cette icône peut être uniquement symbolique et indiquer la présence de messages. Cette icône peut aussi contenir des chiffres indiquant le nombre de messages. Ainsi lorsque l'utilisateur du boîtier 112 allume sa télé, il voit apparaître quelque part sur son écran une icône lui indiquant qu'il a un ou plusieurs messages dans sa boîte à lettres électronique. Dans un exemple simple la mémoire 119 stocke une image au format BMP L'incrustation de l'icône se fait donc par simple modification d'une zone de la mémoire 119. L'incrustation ou non de l'icône peut être, de préférence paramétrée. En effet, l'utilisateur du boîtier 112 peut souhaiter ne pas avoir l'icône alors qu'il est en train de regarder un film.

On passe alors à un étape 206 de récupération des messages. Dans l'étape 206 l'utilisateur du boîtier 112 se connecte à son fournisseur d'accès à Internet, grâce au boîtier 112 par exemple. Si ce fournisseur d'accès gère le serveur 124, le microprocesseur 116, commandé par des codes instruction contenus dans la mémoire 117c, émet une requête en direction du serveur 124 afin que celui-ci envoie au boîtier 112 les messages contenus dans la boîte à lettres électronique. Le nombre de messages non lus sur le serveur 124 va donc être décrémenté d'autant de messages qu'aura rapatriés le boîtier 112. Ainsi lors de la prochaine interrogation par la tête 101 de station du serveur 124 le nombre de messages aura été modifié. Les données reçues par le boîtier 112 via le flux de télévision et concernant l'état de la boîte à lettres électronique de l'utilisateur du boîtier 112 auront donc été modifiés et le champ 118c sera mis à jour.

Le champ 118c peut être mis à jour dès que l'utilisateur du boîtier 112 se connecte à Internet, via le boîtier 112 et rapatrie ses messages électroniques. Ainsi le champ 118c est toujours synchronisé par rapport à l'état réel de la boîte à lettres électronique de l'utilisateur du boîtier 112.

Dans une variante de l'invention, en augmentant le nombre de champs dans les tables 109,c 128 et 133, on peut envisager de gérer plusieurs boîtes à lettres électroniques pour un même boîtier 112.

## Revendications

1. Dispositif de décodage d'un flux d'information de télévision **caractérisé en ce qu'**il comporte des moyens pour extraire du flux d'information des données relatives à la présence d'un ou plusieurs messages dans une boîte à lettres électronique, et des moyens pour visualiser le contenu de ces données pendant une session de télévision.

2. Dispositif selon la revendication 1, **caractérisé en ce que** les moyens pour visualiser comportent un composant électroluminescent dont l'état est fonction des données extraites.

3. Dispositif selon l'une des revendications 1 ou 2, **caractérisé en ce que** les moyens pour visualiser comportent des circuits d'incrustations d'une icône dans un signal d'image produit par le dispositif.

4. Procédé de transmission de données relatives à la présence d'un ou plusieurs messages dans une boîte à lettres électronique **caractérisé en ce que**:
- un opérateur de télévision se connecte à un fournisseur d'accès à Internet pour récupérer des données relatives au contenu de boîtes aux lettres électroniques d'abonnés à l'opérateur et au fournisseur,
- l'opérateur incorpore dans un flux d'information de télévision qu'il diffuse les données qu'il a récupérées,
- on visualise ces données pendant une session de télévision.

5. Procédé selon la revendication 4, **caractérisé en ce qu'**en tant qu'abonné à l'opérateur de télévision et au fournisseur d'accès à Internet:
- on reçoit sur un décodeur un flux d'information de télévision,
- on extrait du flux de télévision de données relatives au contenu d'une boîte à lettres de l'abonné,
- on fait clignoter un composé électroluminescent du décodeur à selon une séquence en relation avec le contenu de la boîte à lettres électronique.

6. Procédé selon la revendication 5, **caractérisé en ce que**:
- on éteint le composé électroluminescent si la boîte à lettre ne contient pas de message,
- on fait clignoter N fois le composant électroluminescent si la boîte à lettre contient N messages, l'intervalle de temps entre deux séquences de N clignotements
- est supérieur à l'intervalle de temps entre deux clignotements d'une séquence de N clignotements.

7. Procédé selon l'une des revendications 4 à 6, dans lequel:
- on produit un signal de télévision à partir du flux d'information de télévision reçu,
**caractérisé en ce que**:
- on incruste dans le signal de télévision une image qui renseigne l'abonné sur le contenu d'une boîte à lettre électronique.

8. Procédé selon l'une des revendications 4 à 7, **caractérisé en ce que**:
- on reçoit par le flux d'information de télévision des données indiquant qu'une boîte à lettre électronique contient des messages,
- on se connecte automatiquement à un fournisseur d'accès à Internet pour récupérer les messages contenus dans la boîte à lettre.

9. Procédé selon l'une des revendications 4 à 8, **caractérisé en ce que**:
- on enregistre dans une mémoire chez un opérateur une liste des abonnés de l'opérateur,
- on enregistre en correspondance de chaque abonné des informations permettant d'obtenir le statut d'une boîte à lettre d'un abonné.

10. Procédé selon l'une des revendications 4 à 9, **caractérisé en ce que** l'opérateur de télévision interroge régulièrement les boîtes à lettres de ses abonnés pour connaître leur statut.
